# EUROPÄISCHE PATENTSCHRIFT

(11) **EP 1 041 394 B1**
(45) Veröffentlichungstag und Bekanntmachung des Hinweises auf die Patenterteilung: **25.02.2004**
(21) Anmeldenummer: 99117012.7
(22) Anmeldetag: 30.08.1999
(51) Int. Cl.: G01S 7/497, G01S 7/481, G01B 11/06

(54) **Optoelektronische Vorrichtung**
Optoelectronic device
Dispositif opto-électronique

(30) Priorität: 01.04.1999 DE 19914962
(43) Veröffentlichungstag der Anmeldung: 04.10.2000
(73) Patentinhaber: Leuze electronic GmbH + Co KG, 73277 Owen/Teck (DE)
(72) Erfinder: Quapil, Gerald, Dr., 73277 Owen/Teck (DE)
(74) Vertreter: Ruckh, Rainer Gerhard, Dr.

(56) Entgegenhaltungen:
- DE-A- 2 104 893
- GB-A- 1 230 912
- GB-A- 2 043 389
- DAMMERT W R ET AL: "MESSUNG VON ZWEIDIMENSIONALEN VERSCHIEBUNGEN MITTELS LASER-TRIANGULATION" TECHNISCHES MESSEN TM, R.OLDENBOURG VERLAG. MUNCHEN, DE, Bd. 59, Nr. 11, 1. November 1992 (1992-11-01), Seiten 428-435, XP000321276 ISSN: 0171-8096

## Beschreibung

Die Erfindung betrifft eine optoelektronische Vorrichtung gemäß dem Anspruch 1 und ein Verfahren zu deren Betrieb gemäß dem Anspruchs 13.

Derartige optoelektronische Vorrichtungen weisen typischerweise einen Sender auf, neben welchem in vorgegebenem Abstand der Empfänger mit mehreren nebeneinanderliegend angeordneten Empfangselementen liegt. Dabei kann der Empfänger insbesondere als CCD-Zeilenelement ausgebildet sein. Eine optoelektronische Vorrichtung und ein Verfahren gemäβ den Oberbegriffen dieser Ansprüche sind bekannt aus dem Artikel : "Technisches Messen TM, "59, 11, S. 428-435, R. Oldenburg Verl. München, DE, Bd. 59, Nr. 11, 1. November 1992 (1992-11-01). "Dammert W.R. et al: Messung von zwei-dimensionalen Verschiebungen mittels Laser-Triangulation".

Mit derartigen optoelektronischen Vorrichtungen kann bei der Detektion von Objekten auch eine Information über deren Abstand zur Vorrichtung gewonnen werden, in dem die Verteilung der auf dem Empfänger auftreffenden Empfangslichtstrahlen ausgewertet wird.

Der Erfindung liegt die Aufgabe zugrunde, eine optoelektronische Vorrichtung der eingangs genannten Art so auszubilden, daß mit dieser die Höhenlage einer Objektkante relativ zur optoelektronischen Vorrichtung zuverlässig erfaßbar ist.

Zur Lösung dieser Aufgabe sind die Merkmale der Ansprüche 1, 13 und 17 vorgesehen. Vorteilhafte Ausführungsformen und zweckmäßige Weiterbildungen der Erfindung sind in den abhängigen Ansprüchen beschrieben.

Bei der erfindungsgemäßen optoelektronischen Vorrichtung sind die Sendelichtstrahlen des Senders auf eine Objektkante ausgerichtet, so daß nur ein Teil der Sendelichtstrahlen als Empfangslichtstrahlen auf den Empfänger zurückreflektiert wird. Durch diese Empfangslichtstrahlen wird ein Teil der Empfangselemente des Empfängers beleuchtet. Die Verteilung dieser beleuchteten Empfangselemente wird in der Auswerteeinheit der optoelektronischen Vorrichtung registriert und wird zur Ermittlung der Höhenlage der Objektkante verwendet.

Insbesondere dann, wenn die Sendelichtstrahlen in schrägem Winkel auf die Objektkante auftreffen, ist die Verteilung der beleuchteten Empfangselemente abhängig von der Distanz der Objektkante zur optoelektronischen Vorrichtung.

Erfindungsgemäß wird zur Kalibrierung der Verteilungen der beleuchteten Empfangselemente ein Distanzsensor mit einem zweiten Sender eingesetzt, welcher Pilot-Sendelichtstrahlen mit konstantem Strahlquerschnitt emittiert. Diese Pilot-Sendelichtstrahlen sind so ausgerichtet, daß diese vollständig auf das Objekt auftreffen.

In der Auswerteeinheit sind die Strahlverläufe der Sendelichtstrahlen und der Pilot-Sendelichtstrahlen als Geometriedaten abgespeichert. Zudem werden die mittels des Distanzsensors erfaßten Distanzwerte des Objekts zur optoelektronischen Vorrichtung erfaßt. Mit diesen Daten wird in der Auswerteeinheit ein Korrekturfaktor ermittelt, mittels dessen die distanzabhängige Variation der Verteilung der beleuchteten Empfangselemente kompensiert wird.

Auf diese Weise liefert die durch die Sendelichtstrahlen generierte Verteilung der beleuchteten Empfangselemente des Empfänger, ein eindeutiges, insbesondere von der Objektdistanz unabhängiges Maß für die Höhenlage der.Objektkante.

Erfindungsgemäß wird die optoelektronische Vorrichtung zur Erfassung der Höhe eines Stapels mit Bögen an einer bogenverarbeitenden Maschine eingesetzt.

In einer besonders vorteilhaften Ausführungsform der Erfindung wird die optoelektronische Vorrichtung zur Erfassung der Stapelhöhe eines Papierstapels an Druckmaschinen oder dergleichen eingesetzt. In diesem Fall ist die Objektkante von der Oberkante des Papierstapels gebildet.

Die Erfindung wird im nachstehenden anhand der Zeichnungen erläutert. Es zeigen:
- Figur 1:: Schematische Darstellung eines Teils der erfindungsgemäßen optoelektronischen Vorrichtung im Längsschnitt:
- Figur 2:: Querschnitt durch die optoelektronische Vorrichtung gemäß Figur 1.
- Figur 3:: Anordnung eines Papierstapels in einer ersten Höhenlage vor der optoelektronischen Vorrichtung gemäß Figuren 1 und 2 für drei verschiedene Abstände,
a) im Abstand d1,
b) im Abstand d2,
c) im Abstand d3.
- Figur 4:: Anordnung eines Papierstapels in einer zweiten Höhenlage vor der optoelektronischen Vorrichtung gemäß Figuren 1 und 2 für drei verschiedene Abstände,
a) im Abstand d1,
b) im Abstand d2,
c) im Abstand d3.
- Figur 5:: Kennlinie zur Kalibrierung der Verteilungen der beleuchteten Empfangselemente des Empfängers der optoelektronischen Vorrichtung.

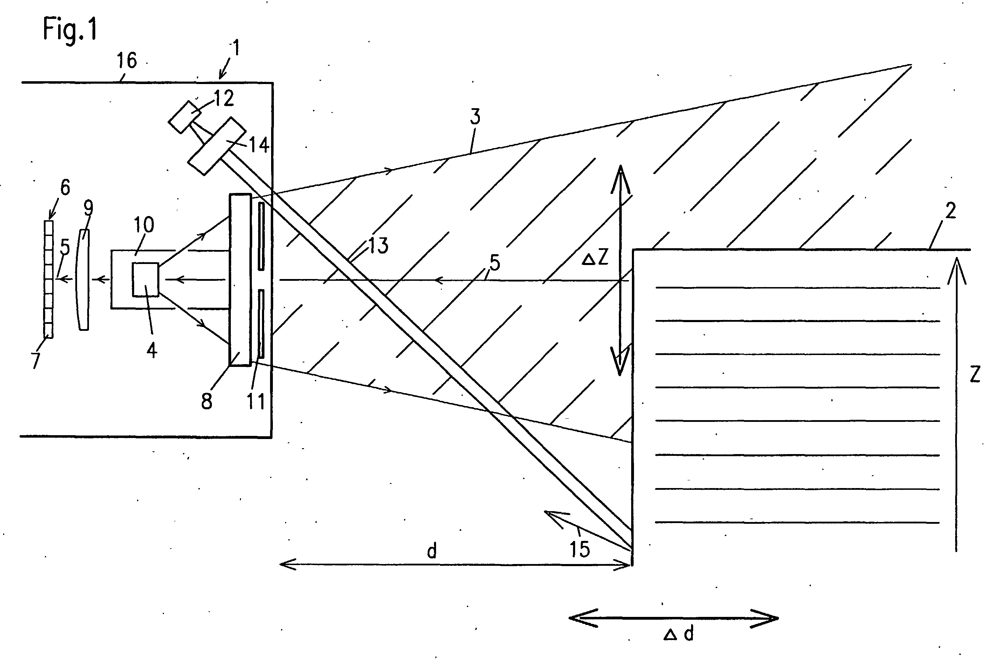

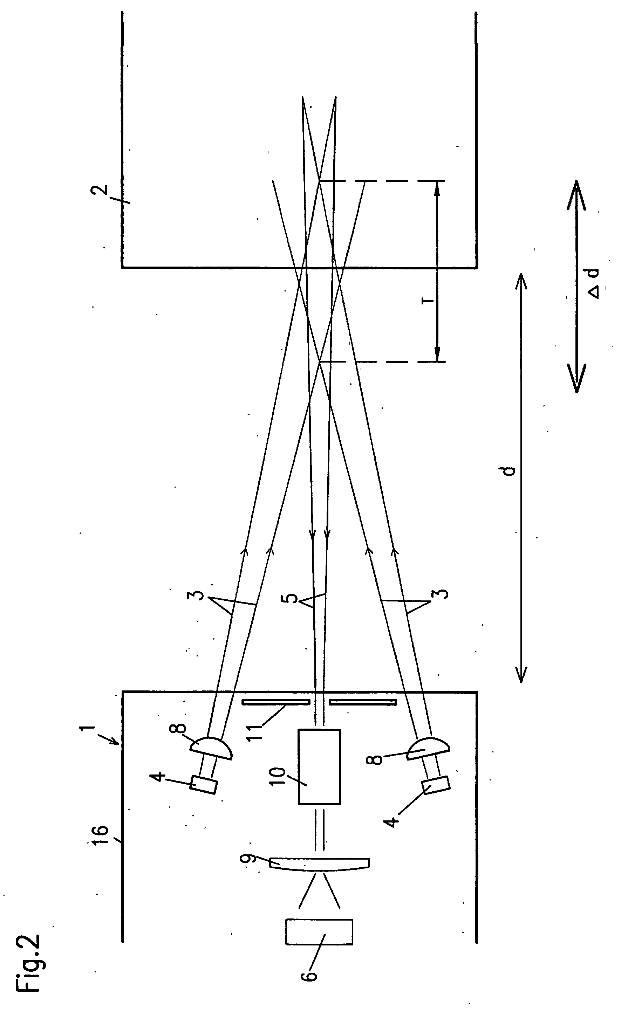

In den Figuren 1 und 2 ist ein Ausführungsbeispiel einer optoelektronischen Vorrichtung 1 zur Erfassung der Höhenlage einer Objektkante dargestellt. Wie aus Figur 1 ersichtlich ist, besteht das Objekt aus einem Papierstapel 2, welcher beispielsweise an einer Druckmaschine oder dergleichen angeordnet ist. Zur Steuerung der Druckmaschine ist unter anderem notwendig die Höhe Z dieses Papierstapels 2 zu erfassen. Dabei kann die Höhe Z des Papierstapels 2 im Bereich ΔZ variieren. Zur Erfassung der Höhe Z des Papierstapels 2 wird mit der optoelektronischen Vorrichtung 1 die Höhenlage der die Objektkante bildenden Oberkante des Papierstapels 2 erfaßt. Hierzu ist die optoelektronische Vorrichtung 1 seitlich in Abstand zum Papierstapel 2 angeordnet und befindet sich im wesentlichen in der Höhe der Oberkante des Papierstapels 2. Der Abstand d des Papierstapels 2 zur optoelektronischen Vorrichtung 1 kann dabei innerhalb des Bereichs Δd variieren.

Die optoelektronische Vorrichtung 1 weist zwei Sendelichtstrahlen 3 emittierende Sender 4 sowie einen Empfangslichtstrahlen 5 empfangenden Empfänger 6 auf. Die Sender 4 bestehen aus Leuchtdioden. Der Empfänger 6 weist mehrere nebeneinanderliegende Empfangselemente 7 auf und ist im vorliegenden Ausführungsbeispiel von einem CCD-Zeilenelement gebildet.

Die Sender 4 und der Empfänger 6 liegen in einer horizontalen Ebene und sind jeweils in Abstand zueinander angeordnet. Dabei sind die Sender 4 symmetrisch beidseits des Empfängers 6 angeordnet. Prinzipiell können anstelle zweier Sender 4 auch mehrere oder auch nur ein Sender 4 vorgesehen sein.

Die Längsachse des CCD-Zeilenelements verläuft senkrecht zu der Strahlachse der vom Papierstapel 2 zurückreflektierten Empfangslichtstrahlen 5 in vertikaler Richtung. Bei dem in Figur 1 dargestellten Ausführungsbeispiel verläuft die Längsachse des CCD-Zeilenelements in vertikaler Richtung.

Den Sendern 4 ist zur Strahlformung der Sendelichtstrahlen 3 jeweils eine Zylinderlinse 8 vorgeordnet, deren Längsachsen jeweils in vertikaler Richtung verlaufend angeordnet sind. Dem Empfänger 6 ist eine von einer vorzugsweise rotationssymmetrischen Linse gebildete Empfangsoptik 9 vorgeordnet. Vor dieser ist ein Dove-Prisma 10 angeordnet, welchem wiederum eine Empfangsblende 11 vorgeordnet ist.

Wie aus Figur 1 ersichtlich ist, ist oberhalb der Ebene, in welcher die Sender 4 und der Empfänger 6 angeordnet sind, ein weiterer Sender 12 angeordnet, welcher Pilot-Sendelichtstrahlen 13 emittiert. Dieser Sender 12 befindet sich vorzugsweise gemeinsam mit dem Empfänger 6 in einer vertikal verlaufenden Ebene. Dieser Sender 12 ist Bestandteil eines Distanzsensors. Prinzipiell kann der Sender 12 einen weiteren Empfänger aufweisen. Die Distanzmessung kann dabei insbesondere nach dem Triangulationsprinzip erfolgen.

Im vorliegenden Beispiel ist dem Sender 12 jedoch der Empfänger 6 zugeordnet, so daß kein weiterer Empfänger vorgesehen werden muß.

Dem Sender 12 ist eine Sendeoptik 14 nachgeordnet. Diese Sendeoptik 14 besteht vorzugsweise aus einer rotationssymmetrischen Linse und ist so ausgebildet, daß vom Sender 12 ein paralleles Strahlenbündel von Pilot-Sendelichtstrahlen 13 emittiert wird. Prinzipiell kann der Sender 12 auch Pilot-Sendelichtstrahlen 13 emittieren, deren Strahldurchmesser sich mit größer werdender Distanz verjüngt. Vorzugsweise weisen die Pilot-Sendelichtstrahlen 13 einen kreisförmigen Strahlquerschnitt auf. Diese Pilot-Sendelichtstrahlen 13 verlaufen schräg nach unten in Richtung des Papierstapels 2, dessen Frontseite einen Teil der Pilot-Sendelichtstrahlen 13 als Pilot-Empfangslichtstrahlen 15 zur optoelektronischen Vorrichtung 1 zurückreflektiert.

Sämtliche Sender 4, 12 und der Empfänger 6 sind an eine nicht dargestellte Auswerteeinheit angeschlossen, welche von einem Microcontroller oder dergleichen gebildet ist. Sämtliche Komponenten der optoelektronischen Vorrichtung 1 sind in einem Gehäuse 16 angeordnet, welches nicht dargestellte Austrittsfenster aufweist, durch welche die Sendelichtstrahlen 3, die Pilot-Sendelichtstrahlen 13 sowie die Empfangslichtstrahlen 5 und die Pilot-Empfangslichtstrahlen 15 geführt sind.

Mit den Sendelichtstrahlen 3 wird die Oberkante des Papierstapels 2 erfaßt. Die optoelektronische Vorrichtung 1 ist dabei seitlich der Oberkante des Papierstapels 2 so angeordnet, daß die Oberkante des Papierstapels 2 für den gesamten Variationsbereich ΔZ der Höhe des Papierstapels 2 und der Distanzen Δd des Papierstapels 2 zur optoelektronischen Vorrichtung 1 mit den Sendelichtstrahlen 3 ausgeleuchtet wird.

Demgegenüber sind die Pilot-Sendelichtstrahlen 13 so ausgerichtet, daß diese über den gesamten Höhen- und Distanzbereich des Papierstapels 2 unterhalb der Oberkante des Papierstapels 2 vollständig auf die im wesentlichen ebene, vertikal angeordnete Frontseite des Papierstapels 2 treffen.

Die Sendelichtstrahlen 3 emittierenden Sender 4 einerseits und der Pilot-Sendelichtstrahlen 13 emittierende weitere Sender 12 andererseits werden alternierend über die Auswerteeinheit aktiviert, so daß entweder nur die Sendelichtstrahlen 3 oder die Pilot-Sendelichtstrahlen 13 auf den Papierstapel 2 treffen.

Dabei wird mit dem-Dove-Prisma 10 die räumliche Verteilung der Empfangslichtstrahlen 5 oder Pilot-Empfangslichtstrahlen 15 in der Ebene senkrecht zu deren Strahlachsen so gedreht, daß deren räumliche Verteilungen vollständig auf das CCD-Zeilenelement abgebildet werden.

Wie aus den Figuren 1 und 2 ersichtlich ist, wird durch die den Sendern 4 nachgeordneten Zylinderlinsen 8 eine derartige Strahlformung der Sendelichtstrahlen 3 erzielt, daß die Strahlquerschnitte der Sendelichtstrahlen 3 die Form von langgestreckten Ellipsen aufweisen. Dabei verlaufen die Längsachsen der Ellipsen in vertikaler Richtung. Die Sender 4 sind dabei seitlich in Abstand zur Oberkante des Papierstapels 2 so angeordnet, daß die Sendelichtstrahlen 3 den gesamten Höhenbereich ΔZ ausleuchten, in welchem die Oberkante des Papierstapels 2 liegen kann. Insbesondere sind die Strahldurchmesser der Sendelichtstrahlen 3 so dimensioniert, daß diese Bedingung für sämtliche Distanzen des Papierstapels 2 innerhalb des Variationsbereichs Δd erfüllt sind. Auf diese Weise ist gewährleistet, daß für sämtliche Höhenlagen der Oberkante des Papierstapels 2 und sämtliche auftretenden Distanzen d der Frontseite des Papierstapels 2 zur optoelektronischen Vorrichtung 1 die Oberkante des Papierstapels 2 mit den im wesentlichen in horizontaler Richtung emittierten Sendelichtstrahlen 3 erfaßt wird. Demgegenüber verlaufen die Pilot-Sendelichtstrahlen 13 schräg nach unten, so daß diese in jedem Fall unterhalb der Oberkante des Papierstapels 2 vollständig auf die Frontseite des Papierstapels 2 auftreffen.

Wie aus Figur 2 ersichtlich ist, überlappen sich die Sendelichtstrahlen 3 der Sender 4 und die vom Papierstapel 2 zurückreflektierten Empfangslichtstrahlen 5 in einem vorgegebenen Bereich, dem sogenannten Tiefenschärfebereich T. Innerhalb dieses Bereichs ist die Oberkante des Papierstapels 2 mit den Sendelichtstrahlen 3 erfaßbar. Wie in Figur 2 dargestellt ist durch eine geeignete Wahl der Strahlverläufe der Sende- 3 und Empfangslichtstrahlen 5 gewährleistet, daß der Tiefenschärfebereich T den gesamten Variationsbereich Δd der Distanz d des Papierstapels 2 zur optoelektronischen Vorrichtung 1 abdeckt. Auf diese Weise ist eine sichere Detektion der Oberkante des Papierstapels 2 über den gesamten Bereich Δd gewährleistet.

Zur Bestimmung der Höhenlage der Oberkante des Papierstapels 2 wird die Verteilung der Empfangselemente 7 ausgewertet, welche durch die vom Papierstapel 2 zurückreflektierten Empfangslichtstrahlen 5 beleuchtet werden. Wie aus Figur 1 ersichtlich ist, trifft je nach aktueller Höhenlage Z des Papierstapels 2 ein bestimmter Teil der Sendelichtstrahlen 3 auf die Frontseite des Papierstapels 2 und wird von diesem als Empfangslichtstrahlen 5 auf den Empfänger 6 zurückreflektiert, wodurch ein Teil der Empfangselemente 7 beleuchtet wird. Der andere Teil der Sendelichtstrahlen 3 verläuft oberhalb der Oberkante des Papierstapels 2 an diesem vorbei und gelangt nicht zum Empfänger 6.

Die Verteilung der beleuchteten Empfangselemente 7 gibt jedoch noch kein eindeutiges Maß für die Höhe Z des Papierstapels 2. Dies beruht darauf, daß im allgemeinen die Verteilung der beleuchteten Empfangselemente 7 von der Distanz d des Papierstapels 2 abhängig ist.

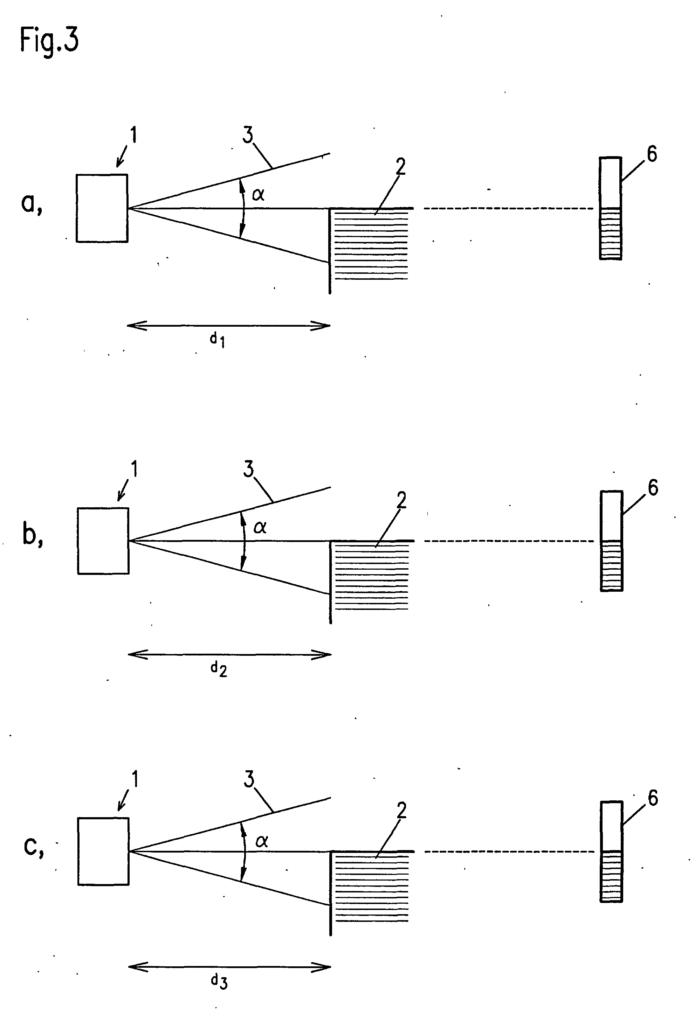

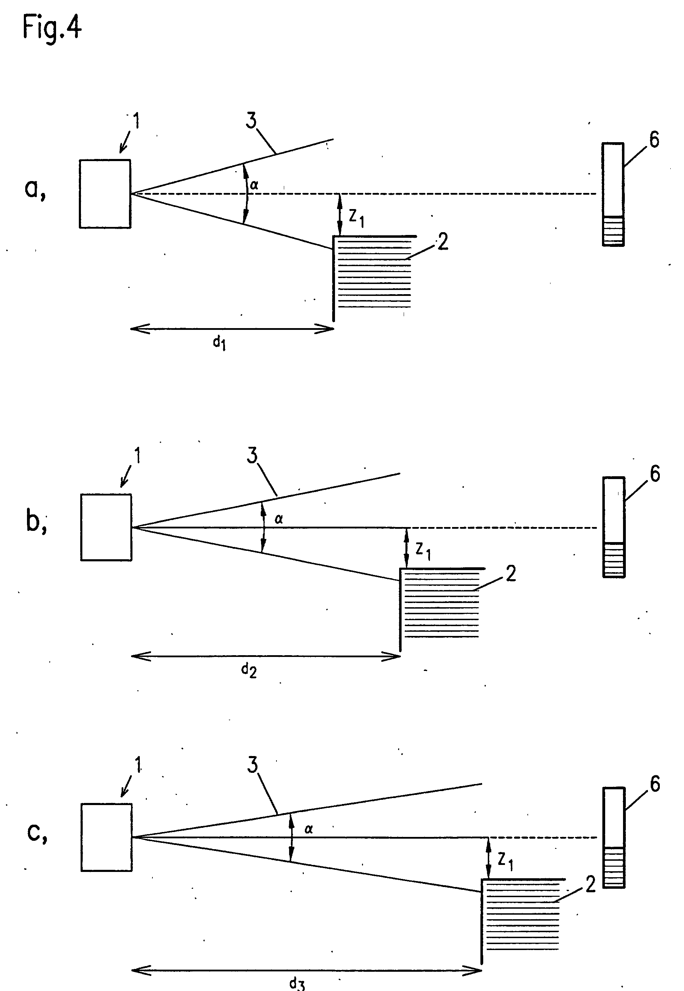

Dies ist in den Figuren 3 und 4 veranschaulicht. In den Figuren 3a-c ist jeweils die optoelektronische Vorrichtung 1 vor dem Papierstapel 2 dargestellt, wobei in den einzelnen Figuren 3a, b, c der Papierstapel 2 in unterschiedlichen Distanzen d1, d2, d3 (d3 > d2 > d1) zur optoelektronischen Vorrichtung 1 angeordnet ist. Dabei liegt die Höhe Z des Papierstapels 2 jeweils in der optischen Achse der parallel verlaufenden und einen Öffnungswinkel α aufweisenden Sendelichtstrahlen 3. In diesem Fall wird für sämtliche Distanzen d1, d2, d3 dieselbe Ausleuchtung des Empfängers 6 erhalten, welche schematisch jeweils hinter der Anordnung der Vorrichtung 1 und des Papierstapels 2 in den Figuren 3a, b, c dargestellt ist. Für jede der Distanzen d1, d2 und d3 ist jeweils die Hälfte der Empfangselemente 7 ausgeleuchtet. Der ausgeleuchtete Teil des Empfängers 6 ist dabei in den Figuren 3a, b, c schraffiert dargestellt.

Die in den Figuren 4a, b, c dargestellten Anordnungen entsprechen im wesentlichen den Anordnungen gemäß den Figuren 3a, b, c. Im Unterschied zu den Anordnungen gemäß den Figuren 3a, b, c liegt bei den Anordnungen gemäß den Figuren 4a, b, c die Oberkante des Papierstapels 2 jeweils um Z1 unterhalb der Strahlachse der Sendelichtstrahlen 3, deren Öffnungswinkel wiederum α beträgt.

In diesem Fall ist die Verteilung der durch die Empfangslichtstrahlen 5 beleuchteten Empfangselemente 7 abhängig von der Distanz d des Papierstapels 2 zur optoelektronischen Vorrichtung 1. Je größer die Distanz d ist, desto größer ist die Anzahl der beleuchteten Empfangselemente 7. Der beleuchtete Teil des Empfängers 6 ist in den Figuren 4a, b, c, wiederum schraffiert dargestellt.

Erfindungsgemäß wird der Pilot-Sendelichtstrahlen 13 emittierende Sender 12 zur Kalibrierung der Verteilungen beleuchteter Empfangselemente 7, welche durch die von dem Papierstapel 2 zurückreflektierten Empfangslichtstrahlen 5 erhalten werden, verwendet.

Die Ermittlung dieser Daten erfolgt während eines Einlernvorgangs. Für die Dauer des Einlernvorgangs ist nur der Pilot-Sendelichtstrahlen 13 emittierende Sender 12 aktiviert, während die anderen Sender 4 deaktiviert sind. Während des Einlemvorgangs wird die Distanz d des Papierstapels 2 zur optoelektronischen Vorrichtung 1 innerhalb des gesamten Variationsbereichs Δd schrittweise geändert.

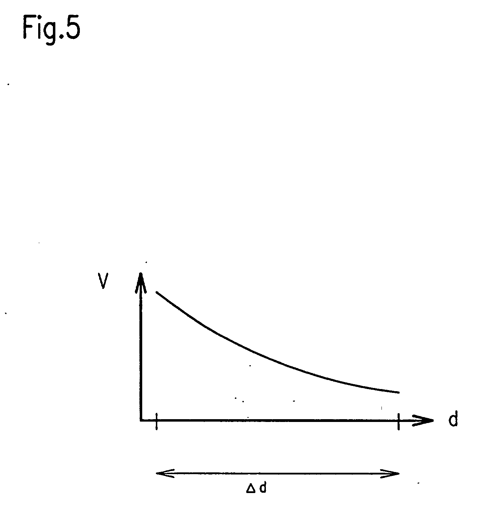

Dabei wird für jeden Distanzwert d die durch die Pilot-Empfangslichtstrahlen 15 erhaltene Verteilung V der beleuchteten Empfangselemente 7 registriert und in der Auswerteeinheit abgespeichert. Auf diese Weise wird eine Kennlinie der Verteilungen V in Abhängigkeit der Distanz d des Papierstapels 2 zur Vorrichtung 1 erhalten (Figur 5).

Diese Kennlinie und die in der Auswerteeinheit ebenfalls abgespeicherten geometrischen Strahlparameter der Sendelichtstrahlen 3 und der Pilot-Sendelichtstrahlen 13 werden zur Kalibrierung der durch die Empfangslichtstrahlen 5 erzeugten Verteilungen der beleuchteten Empfangselemente 7 verwendet.

Dabei wird ausgenutzt, daß bei bekannter Distanz d der Vorrichtung 1 zum Papierstapel 2 und bei vorgegebenen Strahlverläufen der Sendelichtstrahlen 3 und Pilot-Sendelichtstrahlen 13 und damit auch der Empfangslichtstrahlen 5 und der Pilot-Empfangslichtstrahlen 15 ein ein-eindeutiger Zusammenhang zwischen den Verteilungen der beleuchteten Empfangselemente 7 bei aktivierten Sendelichtstrahlen 3 oder Pilot-Sendelichtstrahlen 13 besteht. Die Strahlverläufe sind dabei insbesondere durch die Neigungen, die Öffnungswinkel α und die Strahlbreiten der Sendelichtstrahlen 3 und der Pilot-Sendelichtstrahlen 13 festgelegt. Diese Parameter sind in der Auswerteeinheit als Geometriedaten abgespeichert.

Die Kalibrierung erfolgt während des auf den Einlemvorgang folgenden Arbeitsbetriebs der optoelektronischen Vorrichtung 1. Während dieses Arbeitsbetriebs ist zunächst nur der Pilot-Sendelichtstrahlen 13 emittierende Sender 12 aktiviert. Dabei wird der aktuelle Distanzwert des Papierstapels 2 zur optoelektronischen Vorrichtung 1 ermittelt. Zu diesem Distanzwert wird der entsprechende Kennlinienwert ausgelesen.

Daraufhin wird der Pilot-Sendelichtstrahlen 13 emittierende Sender 12 abgeschaltet und die Sendelichtstrahlen 3 emittierenden Sender 4 werden zur Erfassung der Höhenlage Z des Papierstapels 2 aktiviert.

Durch die von der Oberkante des Papierstapels 2 zurückreflektierten Empfangslichtstrahlen 5 wird entsprechend der Höhenlage des Papierstapels 2 eine entsprechende Verteilung von beleuchteten Empfangselementen 7 auf dem Empfänger 6 erhalten. Diese Verteilung wird anhand des ausgelesenen Kennlinienwerts V für die entsprechende aktuelle Distanz d und der Geometriedaten der Sendelichtstrahlen 3 und der Pilot-Sendelichtstrahlen 13 kalibriert. Hierzu wird aus dem Kennlinienwert V und den Geometriedaten ein Korrekturfaktor berechnet. Mittels dieses Korrekturfaktors wird die Distanzabhängigkeit der durch die Empfangslichtstrahlen 5 generierten Verteilung der beleuchteten Empfangselemente 7 ermittelt, so daß die auf diese Weise kalibrierte Verteilung der beleuchteten Empfangselemente 7 des Empfängers 6 ein eindeutiges Maß für die Höhenlage des Papierstapels 2 liefert.

Somit werden im Arbeitsbetrieb die Sendelichtstrahlen 3 und die Pilot-Sendelichtstrahlen 13 fortlaufend alternierend aktiviert. Falls die Sender 4 und 12 Sendelichtstrahlen 3 und Pilot-Sendelichtstrahlen 13 mit unterschiedlichen Wellenlängen emittieren können die Sender 4 und 12 prinzipiell auch gleichzeitig aktiviert werden.

Für den Fall, daß der Distanzsensor einen separaten Empfänger 6 aufweist, braucht eine Kennlinie wie in Figur 5 dargestellt nicht ermittelt werden. In diesem Fall erfolgt die Kalibrierung unmittelbar mittels des vom Distanzsensor ermittelten Distanzwerts.

## Patentansprüche

1. Optoelektronische Vorrichtung mit wenigstens einem Sendelichtstrahlen emittierenden Sender und einem Empfangslichtstrahlen empfangenden Empfänger, welcher aus mehreren in Abstand zueinander angeordneten Empfangselementen besteht, **dadurch gekennzeichnet, daß** zur Erfassung der Höhenlage einer Objektkante relativ zur optoelektronischen Vorrichtung (1) die vom Sender (4) emittierten Sendelichtstrahlen (3) auf die Objektkante ausgerichtet sind und die durch die von dem Teil der vom Objekt zurückreflektierten Empfangslichtstrahlen (5) beleuchteten Empfangselemente (7) in einer Auswerteeinheit registriert werden, und daß zur Kalibrierung der Verteilungen der beleuchteten Empfangselemente (7) im Distanzsensor mit ein zweiter Sender (12) vorgesehen ist, welcher Pilot-Sendelichtstrahlen (13) emittiert, die auf das Objekt gerichtet sind, wobei in der Auswerteeinheit die Strahlverläufe der Sendelichtstrahlen (3) und Pilot-Sendelichtstrahlen (13) als Geometriedaten abgespeichert sind, und wobei in der Auswerteeinheit die mittels der Pilot-Sendelichtstrahlen (13) ermittelten Distanzwerte erfaßt werden.

2. Optoelektronische Vorrichtung nach Anspruch 1, **dadurch gekennzeichnet, daß** die vom Sender (12) des Distanzsensors emittierten Pilot-Sendelichtstrahlen (13) einen konstanten oder sich verjüngenden Strahlquerschnitt aufweisen, daß die von dem Objekt als Pilot-Empfangslichtstrahlen (15) zurückreflektierten Pilot-Sendelichtstrahlen (13) auf den Empfänger (6) geführt sind, und daß zur Kalibrierung die Verteilungen der von den Pilot-Empfangslichtstrahlen (15) beleuchteten Empfangselemente (7) in Abhängigkeit der Distanz des Objekts in der Auswerteeinheit erfaßt werden.

3. Optoelektronische Vorrichtung nach Anspruch 1 oder 2, **dadurch gekennzeichnet, daß** diese zur Stapelhöhenerfassung von Papierstapeln (2) eingesetzt wird.

4. Optoelektronische Vorrichtung nach einem der Ansprüche 1 - 3, **dadurch gekennzeichnet, daß** der Empfänger (6) von einem CCD-Zeilenelement gebildet ist.

5. Optoelektronische Vorrichtung nach einem der Ansprüche 3 oder 4, **dadurch gekennzeichnet, daß** diese seitlich des Papierstapels (2) angeordnet ist, so daß der Lichtfleck der Sendelichtstrahlen (3) den gesamten Höhenbereich, innerhalb dessen die Oberkante des Papierstapels (2) variiert, erfaßt.

6. Optoelektronische Vorrichtung nach Anspruch 5, **dadurch gekennzeichnet, daß** der Lichtfleck der Sendelichtstrahlen (3) die Form einer langgestreckten Ellipse aufweist, deren Längsachse in vertikaler Richtung verläuft.

7. Optoelektronische Vorrichtung nach Anspruch 6, **dadurch gekennzeichnet, daß** zur Erzeugung des in vertikaler Richtung gestreckten Lichtflecks mehrere Sender (4) vorgesehen sind, denen jeweils eine Sendeoptik zur Strahlformung der Sendelichtstrahlen (3) nachgeordnet sind.

8. Optoelektronische Vorrichtung nach Anspruch 7, **dadurch gekennzeichnet, daß** die Sendeoptiken von Zylinderlinsen (8) gebildet sind.

9. Optoelektronische Vorrichtung nach einem der Ansprüche 6 - 8, **dadurch gekennzeichnet, daß** die Längsachse des CCD-Zeilenelements parallel zur Längsachse des Lichtflecks der Sendelichtstrahlen (3) verläuft.

10. Optoelektronische Vorrichtung nach einem der Ansprüche 1 - 9, **dadurch gekennzeichnet, daß** der Lichtfleck der Pilot-Sendelichtstrahlen (13) vollständig auf eine Seitenfläche des Papierstapels (2) trifft, wobei der Lichtfleck im wesentlichen kreisförmig ausgebildet ist.

11. Optoelektronische Vorrichtung nach Anspruch 10, **dadurch gekennzeichnet, daß** dem Pilot-Sendelichtstrahlen (13) emittierenden Sender (12) eine Sendeoptik (14) nachgeordnet ist, welche von einer rotationssymmetrischen Linse gebildet ist.

12. Optoelektronische Vorrichtung nach einem der Ansprüche 1 - 11, **dadurch gekennzeichnet, daß** dem Empfänger (6) eine Empfangsoptik (9) und eine Empfangsblende (11) vorgeordnet ist, wobei zwischen der Empfangsoptik (9) und der Empfangsblende (11) ein Dove-Prisma (10) zur Drehung des auf den Empfänger (6) auftreffenden Lichtflecks der Empfangslichtstrahlen (5) angeordnet ist.

13. Verfahren zum Betrieb einer optoelektronischen Vorrichtung nach einem der Ansprüche 1 -12, **dadurch gekennzeichnet, daß** zur Erfassung der Höhenlage einer Objektkante relativ zur optoelektronischen Vorrichtung (1) bei auf die Objektkante ausgerichteten Sendelichtstrahlen (3) die durch die von der Objektkante zurückreflektierten Empfangslichtstrahlen (5) beleuchteten Empfangselemente (7) am Empfänger (6) registriert werden, und daß zur Kalibrierung der Verteilung der beleuchteten Empfangselemente (7) mittels eines Distanzsensors, welcher einen Pilot-Sendelichtstrahlen (13) emittierenden Sender (12) aufweist, die Distanz des Objekts zur optoelektronischen Vorrichtung (1) ermittelt wird, wobei aus dem Distanzwert und den Geometriedaten der Strahlverläufe der Sendelichtstrahlen (3) und Pilot-Sendelichtstrahlen (13) ein Korrekturfaktor ermittelt wird, mittels dessen die distanzabhängige Variation der Verteilung der beleuchteten Empfangselemente (7) kompensiert wird.

14. Verfahren nach Anspruch 13, **dadurch gekennzeichnet, daß** bei einem Distanzsensor, dessen Sender (12) Pilot-Sendelichtstrahlen (13) mit konstantem oder sich verjüngendem Strahlquerschnitt emittiert, die vom Objekt zurückreflektierten Pilot-Empfangslichtstrahlen (13) auf den Empfänger (6) geführt werden, wobei zur Kalibrierung die Verteilung der durch die Pilot-Empfangslichtstrahlen (15) beleuchteten Empfangselemente (7) in Abhängigkeit der Distanz des Objekts ermittelt werden.

15. Verfahren nach Anspruch 14, **dadurch gekennzeichnet, daß** während eines Einlemvorgangs das Objekt in unterschiedlichen Abständen zur optoelektronischen Vorrichtung (1) mit den Pilot-Sendelichtstrahlen (13) erfaßt wird, jeweils die Anzahl der beleuchteten Empfangselemente (7) des Empfängers (6) in Abhängigkeit des Abstands bestimmt wird und als Kennlinie in der Auswerteeinheit abgespeichert wird.

16. Verfahren nach Anspruch 15, **dadurch gekennzeichnet, daß** während des auf den Einlemvorgang folgenden Arbeitsbetriebs das Objekt alternierend mit den Sendelichtstrahlen (3) und den Pilot-Sendelichtstrahlen (13) erfaßt wird, daß bei aktivierten Pilot-Sendelichtstrahlen (13) die beleuchteten Empfangselemente (7) am Empfänger (6) zur Ermittlung des aktuellen Abstandswerts anhand der abgespeicherten Kennlinie ermittelt werden, und daß bei darauf aktivierten Sendelichtstrahlen (3) anhand der abgespeicherten Strahlparameter, dem aktuellen Abstandswert und der beleuchteten Empfangselemente (7) des Empfängers (6) die Lage der Objektkante berechnet wird.

17. Verwendung einer optoelektronischen Vorrichtung gemäß einem der Ansprüche 1 - 16 zur Erfassung der Höhe eines Stapels mit Bögen an einer bogenverarbeitenden Maschine.

18. Verwendung nach Anspruch 17, **dadurch gekennzeichnet, dass** die Bögen des Stapels aus Papierbögen, Kartons oder Folien bestehen.

19. Verwendung nach Anspruch 17 oder 18, **dadurch gekennzeichnet, dass** die bogenverarbeitende Maschine von einer Druckmaschine oder einer Stanzmaschine gebildet ist.

## Claims

1. Optoelectronic device with at least one transmitter emitting transmitted light beams and a receiver receiving received light beams, which consists of several receiving elements arranged at a spacing from one another, **characterised in that** for detection of the height position of an object edge relative to the optoelectronic device (1) the transmitted light beams (3) emitted by the transmitter (4) are oriented onto the objected edge and the receiving elements (7) illuminated by the received light beams (5) reflected back by the part of the object are registered in an evaluating unit, and that for calibration of the distributions of the eliminated receiving elements (7) a distance sensor with a second transmitter (12) is provided, which emits pilot transmitted light beams (13) which are directed onto the object, wherein the beam paths of the transmitted light beams (3) and pilot transmitted light beams (13) are stored in the evaluating unit as geometric data and wherein the distance values determined by means of the pilot transmitted light beams (13) are detected in the evaluating unit.

2. Optoelectronic device according to claim 1, **characterised in that** the pilot transmitted light beams (13) emitted by the transmitter (12) of the distance sensor have a constant or tapering beam cross-section, that the pilot transmitted light beams (13) reflected back from the object as pilot received light beams (15) are guided to the receiver (6) and that for calibration the distributions of the receiving elements (7) illuminated by the pilot received light beams (15) are detected in the evaluating unit in dependence on the distance of the object.

3. Optoelectronic device according to claim 1 or 2, **characterised in that** this is used for stack height detection of paper stacks (2).

4. Optoelectronic device according to one of claims 1 to 3, **characterised in that** the receiver (6) is formed by a CCD line element.

5. Optoelectronic device according to one of claims 3 and 4, **characterised in that** this is arranged laterally of the paper stack 92) so that the light spot of the transmitted light beams (3) detects the entire height range within which the upper edge of the paper stack (2) varies.

6. Optoelectronic device according to claim 5, **characterised in that** the light spot of the transmitted light beams (3) has the form of an elongated ellipse, the longitudinal axis of which extends in vertical direction.

7. Optoelectronic device according to claim 6, **characterised in that** for generation of the light spot elongated in vertical direction several transmitters (4) are provided, downstream of each of which a respective transmission optical system is arranged for beam shaping of the transmitted light beams (3).

8. Optoelectronic device according to claim 7, **characterised in that** the transmission optical systems are formed by cylinder lenses (8).

9. Optoelectronic device according to one of claims 6 to 8, **characterised in that** the longitudinal axis of the CCD line element extends parallel to the longitudinal axis of the light spot of the transmitted light beams (3).

10. Optoelectronic device according to one of claims 1 to 9, **characterised in that** the light spot of the pilot transmitted light beams (13) is incident entirely on a side surface of the paper stack 92), wherein the light spot is formed to be substantially circular.

11. Optoelectronic device according to claim 10, **characterised in that** a transmission optical system (14), which is formed by a rotationally symmetrical lens, is arranged downstream of the transmitter (12) emitting pilot transmitted light beams (13).

12. Optoelectronic device according to one of claims 1 to 11, **characterised in that** a receiving optical system (9) and a receiving aperture (11) are arranged upstream of the receiver (6), wherein a Dove prism (10) for rotation of the light spot, which is incident on the receiver (6), of the received light beams (5) is arranged between the receiving optical system (9) and the receiving aperture (11).

13. Method of operating an optoelectronic device according to one of claims 1 to 12, **characterised in that** for detection of the height position of an object edge relative to the optoelectronic device (1) in the case of transmitted light beams (3) oriented onto the object edge the receiving elements (7) illuminated by the received light beams (5) reflected back from the object edge are registered at the receiver (6) and that for calibration of the distribution of the illuminated receiving elements (7) by means of a distance sensor having a transmitter (12) emitting pilot transmitted light beams (13) the distance of the object from the optoelectronic device (1) is determined, wherein a correction factor, by means of which compensation is provided for the distance-dependent variation of the distribution of the illuminated receiving elements (7), is determined from the distance value and the geometric data of the beam paths of the transmitted light beams (3) and pilot transmitted light beams (13).

14. Method according to claim 13, **characterised in that** in the case of a distance sensor, the transmitter (12) of which emits pilot transmitted light beams (13) with constant or tapering beam cross-section, the pilot received light beams (13) reflected back from the object are guided to the receiver (6), wherein for calibration the distribution of the receiving elements (7) illuminated by the pilot received light beams (15) is determined in dependence on the distance of the object.

15. Method according to claim 14, **characterised in that** during a learning process the object is detected at different spacings from the optoelectronic device (1) by the pilot transmitted light beams (13) and the number of the illuminated receiving elements (7) of the receiver (6) is determined each time in dependence on the spacing and is stored as a characteristic curve in the evaluating unit.

16. Method according to claim 15, **characterised in that** during the working operation following the leaming process the object is detected alternately by the transmitted light beams (3) and the pilot transmitted light beams (13), that in the case of activated pilot transmitted light beams (13) the illuminated receiving elements (7) at the receiver (6) are ascertained for determination of the actual spacing value on the basis of the stored characteristic curve and that in the case of transmitted light beams (3) activated thereon the position of the object edge is calculated on the basis of the stored beam parameters, the actual spacing value and the illuminated receiving elements (7) of the receiver (6).

17. Use of an optoelectronic device according to one of claims 1 to 16 for detection of the height of a stack with sheets at a sheet processing machine.

18. Use according to claim 17, **characterised in that** the sheets of the stack consist of paper sheets, cardboard or films.

19. Use according to claim 17 or 18, **characterised in that** the sheet processing machine is formed by a printing machine or a punching machine.

## Revendications

1. Dispositif optoélectronique comprenant au moins un émetteur émettant des rayons lumineux d'émission et un récepteur recevant des rayons lumineux de réception, lequel se compose de plusieurs éléments de réception placés à distance les uns des autres, **caractérisé par le fait que**, pour mesurer la hauteur ou position en hauteur du bord d'un objet par rapport au dispositif optoélectronique (1), les rayons lumineux d'émission (3) émis par l'émetteur (4) sont dirigés sur le bord de l'objet et que les éléments de réception (7) éclairés par la partie des rayons lumineux de réception (5) réfléchis par l'objet sont enregistrés dans une unité d'évaluation, et que, pour étalonner les répartitions des éléments de réception (7) éclairés, il est prévu dans le capteur de distance un deuxième émetteur (12) qui émet des rayons lumineux d'émission pilotes (13) qui sont dirigés sur l'objet, les trajectoires des rayons lumineux d'émission (3) et des rayons lumineux d'émission pilotes (13) étant mémorisées dans l'unité d'évaluation sous forme de données géométriques et les valeurs de distance déterminées au moyen des rayons lumineux d'émission pilotes (13) étant enregistrées dans l'unité d'évaluation.

2. Dispositif optoélectronique selon la revendication 1, **caractérisé par le fait que** les rayons lumineux d'émission pilotes (13) émis par l'émetteur (12) du capteur de distance présentent une section de faisceau constante ou allant en se rétrécissant, que les rayons lumineux d'émission pilotes (13) réfléchis par l'objet en tant que rayons lumineux de réception pilotes (15) sont guidées vers le récepteur (6) et que, pour l'étalonnage, les répartitions des éléments de réception (7) éclairés par les rayons lumineux de réception pilotes (15) sont enregistrées dans l'unité d'évaluation en fonction de la distance de l'objet.

3. Dispositif optoélectronique selon la revendication 1 ou 2, **caractérisé par le fait que** celui-ci est utilisé pour la mesure de hauteur de piles de papier (2).

4. Dispositif optoélectronique selon l'une des revendications 1 à 3, **caractérisé par le fait que** le récepteur (6) est formé d'un élément à lignes CCD.

5. Dispositif optoélectronique selon l'une des revendications 3 ou 4, **caractérisé par le fait que** celui-ci est placé à côté de la pile de papier (2), de sorte que le spot lumineux des rayons lumineux d'émission (3) embrasse toute la plage de hauteurs à l'intérieur de laquelle le bord supérieur de la pile de papier (2) varie.

6. Dispositif optoélectronique selon la revendication 5, **caractérisé par le fait que** le spot lumineux des rayons lumineux d'émission (3) présente la forme d'une ellipse allongée dont le grand axe s'étend en direction verticale.

7. Dispositif optoélectronique selon la revendication 6, **caractérisé par le fait que**, pour générer le spot lumineux s'étendant en direction verticale, il est prévu plusieurs émetteurs (4) suivis chacun d'une optique d'émission pour la mise en forme du faisceau des rayons lumineux d'émission (3).

8. Dispositif optoélectronique selon la revendication 7, **caractérisé par le fait que** les optiques d'émission sont formées de lentilles cylindriques (8).

9. Dispositif optoélectronique selon l'une des revendications 6 à 8, **caractérisé par le fait que** l'axe longitudinal de l'élément à lignes CCD est parallèle au grand axe du spot lumineux des rayons lumineux d'émission (3).

10. Dispositif optoélectronique selon l'une des revendications 1 à 9, **caractérisé par le fait que** le spot lumineux des rayons lumineux d'émission pilotes (13) rencontre entièrement une surface latérale de la pile de papier (2), ledit spot lumineux étant essentiellement circulaire.

11. Dispositif optoélectronique selon la revendication 10, **caractérisé par le fait que** l'émetteur (12) émettant les rayons lumineux d'émission pilotes (13) est suivi d'une optique d'émission (14), laquelle est formée d'une lentille à symétrie de révolution.

12. Dispositif optoélectronique selon l'une des revendications 1 à 11, **caractérisé par le fait que** le récepteur (6) est précédé d'une optique de réception (9) et d'un diaphragme de réception (11), un prisme de Dove étant disposé entre l'optique de réception (9) et le diaphragme de réception (11) pour la rotation du spot lumineux des rayons lumineux de réception (5) arrivant sur le récepteur (6).

13. Procédé pour l'exploitation d'un dispositif optoélectronique selon l'une des revendications 1 à 12, **caractérisé par le fait que** pour enregistrer la hauteur ou la position en hauteur du bord d'un objet par rapport au dispositif optoélectronique (1) avec des rayons lumineux d'émission (3) dirigés sur le bord de l'objet, les éléments de réception (7) éclairés par les rayons lumineux de réception (5) réfléchis par le bord de l'objet sont enregistrés dans le récepteur (6), et que, pour étalonner la répartition des éléments de réception (7) éclairés au moyen d'un capteur de distance, qui présente un émetteur (12) émettant des rayons lumineux d'émission pilotes (13), on détermine la distance de l'objet par rapport au dispositif optoélectronique (1), un facteur de correction étant calculé à partir de la valeur de distance et des données géométriques des trajectoires des rayons lumineux d'émission (3) et des rayons lumineux d'émission pilotes (13), facteur au moyen duquel on compense la variation en fonction de la distance de la répartition des éléments de réception (7) éclairés.

14. Procédé selon la revendication 13, **caractérisé par le fait que** dans le cas d'un capteur de distance dont l'émetteur (12) émet des rayons lumineux d'émission pilotes (13) de section de faisceau constante ou allant en se rétrécissant, les rayons lumineux d'émission pilotes (13) réfléchis par l'objet sont guidés vers le récepteur (6) et que, pour l'étalonnage, la répartition des éléments de réception (7) éclairés par les rayons lumineux de réception pilotes (15) est déterminée en fonction de la distance de l'objet.

15. Procédé selon la revendication 14, **caractérisé par le fait que** pendant un processus d'apprentissage l'objet est mesuré à différentes distances par rapport au dispositif électronique (1) avec les rayons lumineux de réception pilotes (15), le nombre des éléments de réception (7) éclairés en fonction de la distance est déterminé à chaque fois et mémorisé dans l'unité d'évaluation en tant que courbe caractéristique.

16. Procédé selon la revendication 15, **caractérisé par le fait que** pendant le service opérationnel suivant le processus d'apprentissage, l'objet est mesuré alternativement avec les rayons lumineux d'émission (3) et les rayons lumineux d'émission pilotes (13), que lorsque les rayons lumineux d'émission pilotes (13) sont activés, les éléments de réception (7) éclairés sur le récepteur (6) sont déterminés pour calculer la valeur de distance actuelle à l'aide de la courbe caractéristique mémorisée et que lorsque les rayons lumineux d'émission (3) sont activés, la position du bord de l'objet est calculée à l'aide des paramètres de faisceau enregistrés, de la valeur de distance actuelle et des éléments de réception (7) éclairés du récepteur (6).

17. Utilisation d'un dispositif optoélectronique selon l'une des revendication 1 à 16 pour mesurer la hauteur d'une pile de feuilles sur une machine travaillant avec des feuilles.

18. Utilisation selon la revendication 17 ou 18, **caractérisée par le fait que** les feuilles de la pile sont des feuilles de papier, des cartons ou des feuilles d'autres matériaux.

19. Utilisation selon la revendication 17 ou 18, **caractérisée par le fait que** la machine travaillant avec des feuilles est formée d'une machine à imprimer ou d'une machine à poinçonner.
